# EUROPEAN PATENT APPLICATION

(11) **EP 1 058 102 A1**
(43) Date of publication of application: **06.12.2000**
(21) Application number: 00500105.2
(22) Date of filing: 29.05.2000
(51) Int. Cl.: G01K 1/14

(54) **Thermometer for baths and the like**

(30) Priority: 31.05.1999 ES 9901385 U
(71) Applicant: Promocrystal, S.L., 08004 Barcelona (ES)
(72) Inventor: Callegaris Senn, Miguel Angel, 08004 Barcelona (ES)
(74) Representative: Durán Olivella, Alfonso

(57) **Abstract**

The thermometer comprises a body of generally laminar structure, which has a general structure of two faces, an upper face and a lower face, and has, on both faces, cavities that can constitute flotation chambers when the body of the thermometer is placed on the surface of the water of a bath or the like, a heat-sensitive laminar element indicating the water temperature being arranged at the base of one of the cavities.

## Description

The present invention relates to a thermometer applicable to baths and the like, which is to permit rapid and easy appraisal of the temperature of the water contained in the bath or similar receptacle.

Currently, various types of thermometer applicable to baths and the like are known, although, owing to their characteristics, either they are excessively complex and cumbersome for the task they are to accomplish or they have features of vulnerability in use owing to the knocks and jolts which may occur during bathing.

The thermometer to which the present invention relates has novel features which solve the problems mentioned above since, in addition to its great simplicity and economical nature, it has substantial strength which enables it to be used without becoming damaged and broken, and its cost price is also greatly reduced. In addition to its characteristic functional features, the thermometer to which the present invention relates may have decorative features which make it especially attractive in use, for example when it is applied in the bathing of young children.

The thermometer to which the present invention relates exhibits the feature of floating in whatever position it adopts on the surface of the water, without it being necessary for the material from which it is constructed to be specifically a floating material.

In order to achieve its aims, the thermometer to which the present invention relates has a laminar body which may adopt a figurative structure, for example of a fish or other animal, having a structure provided with cavities in its two main faces so that, when it is placed on the surface of the water, on one or other face, the cavities act as flotation chambers so that the thermometer does not sink even if its position on the surface of the water is inverted. At the base of one of the cavities, it has a heat-sensitive element capable of indicating the water temperature.

For a better understanding of the invention, some drawings of a thermometer for baths and the like according to the present invention are added by way of non-limiting illustrative example.

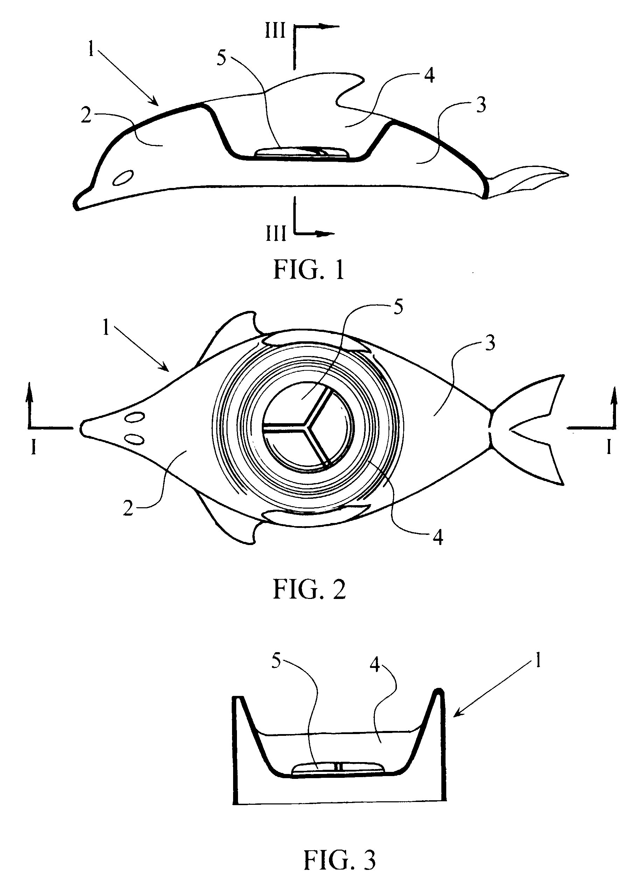

Figure 1 is a longitudinal section through an embodiment of a thermometer to which the present invention relates.

Figure 2 is a plan view.

Figure 3 is a cross-section through the sectional plane indicated.

Figure 4 is a diagrammatic section through the thermometer when in position on the surface of the water.

Figure 5 is a plan view, similar to that of Figure 2, showing the appearance of inscriptions indicating the water temperature.

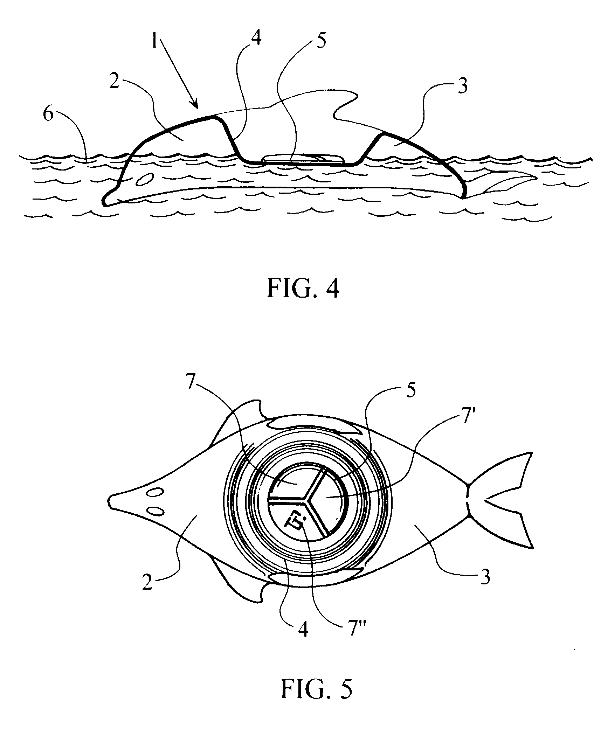

The thermometer to which the present invention relates has a body of generally laminar structure 1 which may represent a figure such as a fish or other animal, having a concave structure on each of its two faces, for example by means of the main cavities 2 and 3 in one of the faces and the cavity 4 in the opposite face, so that the cavities act as flotation chambers enabling the thermometer to float on the surface of the water despite the fact that the material from which it is produced is not necessarily a floating material. As shown in Figure 4, the thermometer 5 is arranged on the surface 6 of the water of the bath, so that the chambers 2 and 3 are partially filled with air, thus enabling the thermometer to float. If the position of the thermometer on the surface of the water were inverted, the upper cavity 4 would act as a flotation chamber, preventing it from sinking.

At the base of one of the cavities, for example, at the base of the cavity 4 of the central portion of the upper face, is the heat-sensitive laminar element 5 which may have several regions, such as 7, 7', 7", in which, given the features of the heat-sensitive laminar element 5, various inscriptions or graphic representations appear which are directly related to the water temperature, for example, an indication of the temperature measured in degrees centigrade.

The material used for the body 1 of the thermometer or the precise form of the body 1 or of the flotation cavities, may be varied widely provided that they meet the aims of the invention.

## Claims

1. Thermometer for baths and the like, characterised in that it comprises a body of generally laminar structure, which has a general structure of two faces, an upper face and a lower face, and has, on both faces, cavities that can constitute flotation chambers when the body of the thermometer is placed on the surface of the water of a bath or the like, a heat-sensitive laminar element indicating the water temperature being arranged at the base of one of the cavities.

2. Thermometer for baths and the like according to claim 1, characterised in that one of the cavities of the upper face or main face of the thermometer occupies a central position relative to the body of the thermometer and the heat-sensitive element is fitted at the base thereof.
